(19) Europäisches Patentamt
European Patent Office
Office européen des brevets

(11) **EP 2 009 859 B1**

(12) **EUROPEAN PATENT SPECIFICATION**

(45) Date of publication and mention
of the grant of the patent:
**23.12.2009 Bulletin 2009/52**

(51) Int Cl.:
***H04L 25/02*** *(2006.01)*     ***H04L 25/03*** *(2006.01)*

(21) Application number: **08166372.6**

(22) Date of filing: **05.04.2006**

(54) **Method and receiver for estimating the channel impulse response using a constant modulus algorithm**

Verfahren und Empfänger zur Bewertung der Kanalimpulsreaktion bei einer konstanten Modulinterferenz-Entfernungsinteraktion

Procédé et récepteur pour estimer la réponse d'impulsion de canal à l'aide d'une interaction d'élimination d'interférences à module constant

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**31.12.2008 Bulletin 2009/01**

(62) Document number(s) of the earlier application(s) in accordance with Art. 76 EPC:
**06251911.1 / 1 843 533**

(73) Proprietor: **Research In Motion Limited**
**Waterloo, Ontario N2L 3W8 (CA)**

(72) Inventors:
• **Wu, Huan**
**Kanata Ontario K2K 3K2 (CA)**
• **Simmons, Sean**
**Waterloo Ontario N2L 3W8 (CA)**
• **Kemenczy, Zoltan**
**Waterloo Ontario N2L 3W8 (CA)**

(74) Representative: **Fennell, Gareth Charles**
**Kilburn & Strode LLP**
**20 Red Lion Street**
**London WC1R 4PJ (GB)**

(56) References cited:
**EP-A- 1 261 181**     **EP-A- 1 492 288**
**US-A1- 2003 210 741**     **US-A1- 2004 170 234**
**US-B1- 6 393 068**

• **PUKKILA M ET AL: "Cochannel interference suppression for constant modulus signals" COMMUNICATIONS, 2004 IEEE INTERNATIONAL CONFERENCE ON PARIS, FRANCE 20-24 JUNE 2004, PISCATAWAY, NJ, USA,IEEE, 20 June 2004 (2004-06-20), pages 2548-2552, XP010712263 ISBN: 0-7803-8533-0**
• **SEZGINER S ET AL: "An improved matched filter based symbol synchronizer for MSK transmission over fading multipath channels" VEHICULAR TECHNOLOGY CONFERENCE, 2004. VTC2004-FALL. 2004 IEEE 60TH LOS ANGELES, CA, USA 26-29 SEPT. 2004, PISCATAWAY, NJ, USA,IEEE, 26 September 2004 (2004-09-26), pages 1678-1682, XP010786921 ISBN: 0-7803-8521-7**
• **YONGJUN DENG ET AL: "Robust LMMSE turbo equalization algorithm to imperfect channel estimations" VEHICULAR TECHNOLOGY CONFERENCE, 2005. VTC-2005-FALL. 2005 IEEE 62ND DALLAS, TX, USA 25-28 SEPT., 2005, PISCATAWAY, NJ, USA,IEEE, vol. 3, 25 September 2005 (2005-09-25), pages 1402-1406, XP010878675 ISBN: 978-0-7803-9152-9**

**Description**

**Field of the Invention**

The present invention relates to the field of communications systems, and more particularly, to estimating the channel impulse response for reducing interference within communications systems.

**Background of the Invention**

Cellular networks are expanding as more users turn to mobile devices as their primary and secondary communications devices, thus requiring an increase in the amount of wireless infrastructure. The increased load demands on the infrastructure often causes network congestion. This mandates an increase to the capacity of the communications networks, such as the GSM/GPRS (General Packet Radio Service), to reduce interference. Different proposals to increase capacity and reduce interference include systems for frequency planning or quality of signal control, power control schemes, and mobile station performance enhancement systems.

Wireless and cellular networks also suffer from increased interference emanating from other users, such as neighboring cells on the same frequency, known as co-channel interference (CCI), or interference emanating from neighboring frequencies on the same cell, known as adjacent channel interference (ACI). A single-antenna interference cancellation (SAIC) system is sometimes used to counter CCI. The use of this type of system has been standardized by the 3G-partnership project (3GPP), as the technical specification group (TSG) for the GSM/EDGE radio-access network (GERAN).

SAIC can reduce interference using Downlink Advanced Receiver Performance (DARP) techniques, as adopted by the 3GPP. The 3GPP technical specification 05.05V8.11, entitled the Third Generation Partnership Project, Technical Specification Group GSM/EDGE Radio Access Network, Radio Transmission and Reception, is hereby incorporated by reference in its entirety. This specification describes the requirements for different components used in such communications systems, for example, the transceivers, base stations, and other components.

Different SAIC algorithms used as interference reduction systems have been proposed, including a constant modulus method and joint demodulation method (JDM), which uses the joint demodulation of the user and an interference sequence. These systems typically begin with a standard least-squares (LS) estimate of a propagation channel, and a static channel profile for an interferer. A joint branch metric can be minimized using modified Viterbi systems, and any estimated sequences for an interfering signal in a least mean squares (LMS) algorithm can update channel estimates for a desired interfering propagation channel.

Such systems are disclosed in U.S. Patent No. 7,006,811, U.S. Patent Publication No. 2004/0170234, and an article by the Nokia Research Center entitled Co-Channel Interference Suppression For Constant Modulus Signals (by Pukkila et al, IEEE Communications Society, 20 June 2004, pages 2548 - 2552 ISBN:0-7803-8533-0). These systems describe an iterative method for improving channel impulse response (CIR) estimation. In such systems, the timing offset of a training sequence is presumed to be perfectly known. This assumption, however, cannot always be held, and a valid assumption could be that the timing offset is randomly distributed over a number of symbols. Thus, the CIR and timing offset could be jointly estimated.

**Summary of the Invention**

According to a first aspect, there is provided a method of processing a received communications signal, comprising: estimating an initial Channel Impulse Response (CIR) of the received communications signal; and applying a constant modulus interference removal iteration to improve the initial channel impulse estimation.

According to a second aspect, there is provided a receiver comprising: a channel estimator circuit that receives a communications signal and estimates channel impulse response components; and an equalizer circuit that receives the cannel impulse response components and estimates an initial Channel Impulse Response (CIR) of the received communications signal and applies a constant modulus interference removal iteration to improve the initial channel impulse estimation.

In embodiments, a receiver and associated method estimates a channel impulse response of a communications signal transmitted within a wireless communications system. A communications signal is received as a burst of transmitted symbols including a known training sequence. The timing offset is determined by peak cross-correlation between the received signal and the known training sequence. An initial channel impulse response is estimated based on the cross-correlations at the timing offset. A constant modulus interference removal iteration is applied to improve the initial channel impulse estimation.

In accordance with other embodiments, channel parameters are estimated as channel impulse response components that are processed for estimating the initial channel impulse response. A least squares (LS) estimation can be applied in some cases for estimating channel parameters. The timing offset of the known training sequence of the transmitted symbols is randomly distributed over a number of symbols. At least about three iterations are applied and can be implemented using a digital signal processor (DSP). A communications signal is typically formed in accordance with a global system for mobile communications (GSM).

In yet other embodiments, a channel estimator circuit and equalizer circuit are used. The equalizer circuit can be formed as a single antenna interference cancellation equalizer circuit, although it should be understood that conventional non-SAIC and SAIC receivers can be used.

## Brief Description of the Drawings

Other objects, features and advantages will become apparent from the detailed description which follows, when considered in light of the accompanying drawings in which:

FIG. 1A is a block diagram of components of a known receiver that could be used for a constant modulus interference removal iteration.
FIG. 1B is a flowchart showing a method of operation of a known receiver such as used with the components of FIG. 1.
FIG. 2 is a high-level block diagram showing an example of the sequence flow used in a receiver and method for estimating the channel impulse response using an constant modulus interference removal iteration in accordance with a non-limiting embodiment.
FIG. 3 is a high-level block diagram showing basic components used in the sequence example shown in FIG. 2.
FIGS. 4 and 5 are graphs showing performance evaluations by using a different number of iterations in accordance with a non-limiting embodiment.
FIGS. 6 and 7 are graphs showing performance and verification of a digital signal processing (DSP) implementation in a GSM receiver, in accordance with a non-limiting embodiment.
FIG. 8 is a graph showing performance and a frame erasure rate (FER) in accordance with a non-limiting embodiment.
FIG. 9 is a graph showing performance and a residual bit error rate in accordance with a non-limiting embodiment.

## Detailed Description of the Preferred Embodiments

Different embodiments will now be described more fully hereinafter with reference to the accompanying drawings, in which preferred embodiments are shown. Many different forms can be set forth and described embodiments should not be construed as limited to the embodiments set forth herein. Rather, these embodiments are provided so that this disclosure will be thorough and complete, and will fully convey the scope to those skilled in the art. Like numbers refer to like elements throughout.

A receiver and associated method estimates a channel impulse response of a communications signal transmitted within a wireless communications system. A communications signal is received as a burst of transmitted symbols including a known training sequence. The timing offset is determined by peak cross-correlation between the received signal and the known training sequence. An initial channel impulse response is estimated based on the cross-correlations at the timing offset. A constant modulus interference removal iteration is applied to improve the initial channel impulse estimation.

In accordance with another aspect, channel parameters are estimated as channel impulse response components that are processed for estimating the initial channel impulse response. A least squares (LS) estimation can be applied in some cases for estimating channel parameters. The timing offset of the known training sequence of the transmitted symbols is randomly distributed over a number of symbols. At least about three iterations are applied and can be implemented using a digital signal processor (DSP). A communications signal is typically formed in accordance with a global system for mobile communications (GSM).

In yet another aspect, a channel estimator circuit and equalizer circuit are used. The equalizer circuit can be formed as a single antenna interference cancellation equalizer circuit, although it should be understood that conventional non-SAIC and SAIC receivers can be used.

As is known to those skilled in the art, the accuracy of the channel impulse response (CIR) estimation typically has a direct impact on the error rate performance of a GSM receiver, as specified by 3GPP, for example, in sensitivity and interference reference performance test cases. A least squares (LS) CIR estimator, however, does not always provide an appropriate margin for some test cases. The described embodiments explained below improve the CIR estimation to ensure that mobile wireless communications devices, for example, handhelds, pass test cases with a significant comfort margin.

In accordance with non-limiting examples of preferred embodiments, to reduce the computation in the case of joint timing and CIR estimation, it is possible to start with a cross-correlation based timing and CIR estimation, and apply the CMIR iterations to the initial CIR estimation from the cross correlations. The penalty for this process was found to be less than 1/5 dB in the SIR/SNR (Signal-to-Interference/Signal-to-Noise) region of interest. Furthermore, the required number of iterations can be substantially reduced by finding an appropriate step size for the iterations. By applying the iterative CMIR to improving the CIR estimation, and leaving any Viterbi equalizer metrics unchanged, the performance in both interference and AWGN (Additive While Gaussian Noise) dominant cases can be improved. For example, the implementation in a 16-bit DSP showed that a 3-iteration CMIR costs 5808 DSP cycles, about 5 MIPs (million instructions per second) for four slots down and 1.25 MIPs for a single slot GSM. It improves the FER/RBERib (Frame Error Rate/ Residual Bit Error Rate) performance by 0.5~1.5 dB (decibel) compared with the current LS CIR estimator.

The embodiments as described differentiate prior art solutions in several aspects, including but not limited to:

1) The process and receiver starts with the cross-correlation based timing and CIR estimation, which greatly reduces the computation while minimizing the performance loss. The cross-correlation is done by convolving the full length of the training sequence with the received signal, and a smoothing window, optimized with a length of three symbols, is applied to the cross-correlation to improve the timing estimation. The computation is further reduced by substantially reducing the number of required iterations; and

2) The overall solution is simplified by applying the iterative CMIR to improving CIR estimation and leaving the equalizer structure unchanged. It eliminates the performance loss in Additive White Gaussian Noise (AWGN) cases.

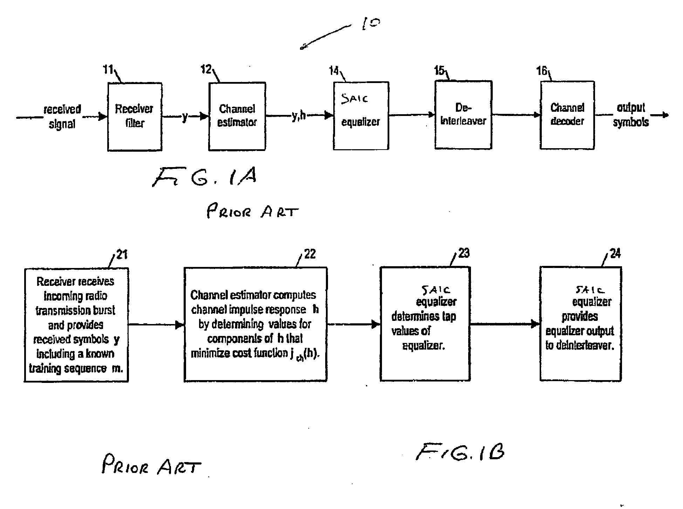

For purposes of illustration, a known series of components and process are described relative to FIGS. 1A and 1B. The described prior art receiver is typically part of a mobile station or base station of a radio access network, and the described method of operation relates to providing interference cancellation according to a single antenna interference cancellation (SAIC) algorithm, using a channel estimator to estimate channel impulse response components for use by a SAIC equalizer. This method as described can use an iterative Least to Mean Squares procedure to minimize a cost function.

Referring now to FIG. 1A, a cellular network communications receiver **10** includes a receive filter **11**, which provides a filtered and sampled (base band) waveform with received samples indicated as components of a vector y. The filter **11** is followed by a channel estimator **12**, for example, a constant modulus channel estimator, which assumes a constant modulus (constant signal power) for interfering signals. The received samples y are input to the channel estimator, which provides the values of the components of the channel impulse response h with components $h_i$. The components $h_i$ are used by later stages in the receiver in a nonlinear symbol or sequence detector, or in calculating tap values for a transversal filter used by the receiver in determining transmitted symbols from received symbols.

The channel estimator **12** in the embodiment shown provides the channel impulse response components $h_i$ to an equalizer **14**, which is a single antenna interference cancellation equalizer. Other kinds of equalizers may be used with the channel estimator **12**, or combinations of different kinds of equalizers may be used, with criteria for selecting one or another of the equalizers depending on measurements indicating which of the equalizers would be most suitable under current operating conditions. For example, a receiver might include both a SAIC equalizer and a conventional (non-SAIC) equalizer, and the channel estimator might provide the channel impulse response components $h_i$ to a selector module, along with a measurement indicating whether or not a strong interfering signal is present. The selector module could select either the SAIC equalizer or the conventional equalizer, depending on the measurement provided by the channel estimator module. The decision is usually made by comparing the measurement value with a predetermined threshold. A conventional (non-SAIC) equalizer could minimize either the sequence error probability, in what is typically called a Maximum-Likelihood Sequence Estimation (MLSE), or the symbol error probability, in what is typically called a Maximum A Posteriori (MAP) equalizer.

The SAIC equalizer **14** can use either a blind SAIC algorithm, or a joint detection SAIC algorithm. Further details of this algorithm are described in U.S. Patent Application Publication No. 2004/0170234 and article entitled, "Cochannel Interference Suppression for Constant Modulus Signals," identified above. The SAIC equalizer **14** in this example is followed by a deinterleaver circuit **15** and channel decoder **16** with output symbols.

Referring now to FIG. 1B, a method for operating a known receiver such as illustrated in FIG. 1A receives an incoming radio transmission burst (block 21) and provides K received symbols (samples) $y_i$, ..., $y_k$, including a known training sequence of P symbols $m_l$, ..., $m_p$. The channel estimator **12** uses the training sequence to compute the channel impulse response h by determining values for components of h that minimize cost function $J_{ch}(h)$ (block 22). The difference between samples of the received radio transmission burst and the corresponding channel response to the known training sequence are called interference samples. Since the difference is an average interference power (of an interfering signal), the cost function indicates a cumulative difference magnitude of power associated with the interference samples and the average interference power.

The SAIC equalizer **14** determines values for a filter in case of a linear SAIC equalizer **14** (block 23), or performs a trellis search in case of a nonlinear equalizer structure. The SAIC equalizer **14** provides the equalizer output (symbols according to, for example, the equalization filter) to the deinterleaver **15,** which then provides deinterleaved symbols to the channel decoder **16** (block 24).

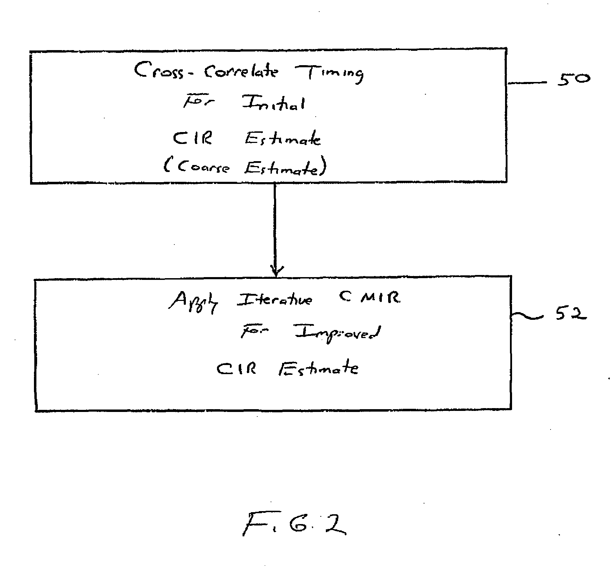

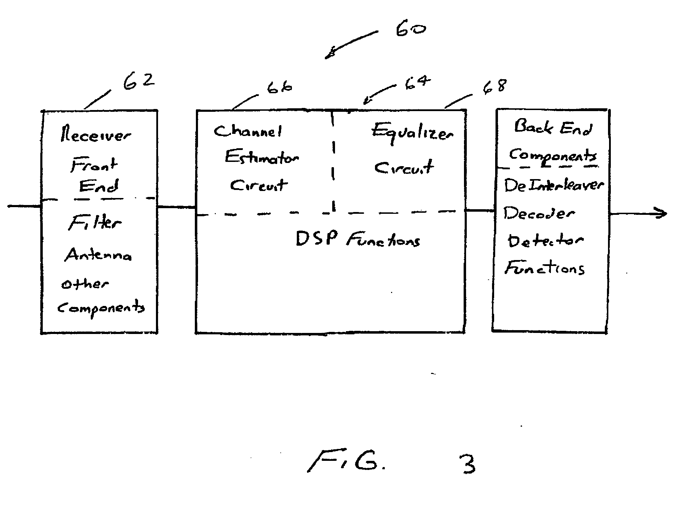

As noted before, the channel impulse response (CIR) estimation has an impact on the error rate performance of a mobile GSM receiver. There now follows details of preferred embodiments as shown in the non-limiting examples of FIGS. 2-9. FIG. 2 illustrates a high-level sequence of operation in accordance with a non-limiting embodiment. FIG. 3 is a block diagram of a receiver in accordance with a non-limiting embodiment and showing its basic components.

As shown in FIG. 2, as a high-level example of a non-limiting embodiment, a cross-correlated timing occurs for an initial CIR estimate as a coarse estimate of CIR as shown in block 50. When the coarse estimate is obtained, the iterative CMIR is applied for an improved CIR estimate as shown in block 52. Thus, one distinguishing aspect with the embodiment as described is the initial CIR estimate, which could be considered a coarse estimate for CIR, followed by the CMIR iterations to obtain the improved CIR estimate.

FIG. 3 shows basic components of a receiver **60** and showing the receiver front end **62** as having a basic antenna and filter and related components. A main processing section **64** includes a channel estimator circuit **66** and equalizer circuit **68**. The main processing circuit includes DSP functions to obtain channel estimation and perform channel equalization. The equalizer circuit can be formed as a Viterbi equalizer circuit. A digital signal processor can implement the constant modulus interference removal iteration. The channel estimator circuit **66** could apply a least squares (LS) estimation for estimating channel parameters. The equalizer circuit could include the taps based on estimated values of channel impulse response components.

As will be explained below, the known training sequence of transmitted symbols is typically randomly distributed over a number of symbols. There now follows a description of basic CIR estimation followed by details of preferred embodiments. The basic algorithms, in accordance with non-limiting examples, will now be described.

It should be understood that the conventional Least Squares (LS) CIR estimation minimizes the following cost function:

$$Q(\mathbf{h}) = \sum_{k=1}^{p} \left| e_k(\mathbf{h}) \right|^2 \qquad (1)$$

where h = $[h_1, h_2, \cdots h_L]^T$ is the CIR vector of the desired signal and

$$e_k(\mathbf{h}) = x_k - \sum_{l=1}^{L} h_l s_{L+k-l} \qquad (2)$$

and $x_k$ and $S_{L+k-l}$ are the received samples and the known symbols of the training sequence. L is the number of taps the CIR and p = $P - L + 1$, where $P$ is the number of symbols in the training sequence.

In these systems, the cost function for CIR estimation is as follows:

$$J(\mathbf{h}) = \sum_{k=1}^{p} [| e_k(\mathbf{h}) |^2 - \bar{e}^2(\mathbf{h})]^2 \qquad (3)$$

where

$$\bar{e}^2(\mathbf{h}) = \frac{1}{p} \sum_{k=1}^{p} | e_k(\mathbf{h}) |^2 \qquad (4)$$

The rationale behind (3) is that when noise is free and the interference has a constant modulus (envelope), the influence of the interference on CIR estimation is removed. Therefore, the cost function (3) is referred to as constant modulus interference removal (CMIR), although in reality the interference in the received signal hardly preserves the constant modulus property due to fading and multiple interferers. The cost function explained relative to (3) improves the CIR estimation for both interference and Additive White Gaussian Noise (AWGN) dominant cases.

Instead of trying to find the closed form solution for the minimization of (3), an iterative numerical solution can use a gradient-based search:

$$\mathbf{h}(k+1) = \mathbf{h}(k) - \mu \nabla_{\mathbf{h}} J(\mathbf{h}) \qquad (5)$$

where $\mu$ is the step size and

$$\nabla_{\mathbf{h}} J(\mathbf{h}) = \frac{\partial J(\mathbf{h})}{\partial \mathbf{h}^*} = \sum_{k=1}^{p} 2(|e_k|^2 - \bar{e}^2)(\frac{\partial |e_k|^2}{\partial \mathbf{h}^*} - \frac{\partial \bar{e}^2}{\partial \mathbf{h}^*})^{\cdot} \qquad (6)$$

$$\frac{\partial |e_k|^2}{\partial \mathbf{h}^*} = -\mathbf{S}_k^* e_k \qquad (7)$$

$$\frac{\partial \bar{e}^2}{\partial \mathbf{h}^*} = \frac{1}{p} \sum_{k=1}^{p} \frac{\partial |e_k|^2}{\partial \mathbf{h}^*} \qquad (8)$$

and

$$\mathbf{S}_k = [s_{k+L-1}, s_{k+L-2}, \cdots, s_k]^T \qquad (9)$$

The LS CIR estimation by (1) can be used as an initial value for the iteration, and a number of ten (10) iterations was used in various simulations.

It should be understood that the CMIR iteration can be applied if the timing offset of the burst is exactly known. Due to the time-varying nature of the GSM channel, the timing offset of the burst (and hence the offset of the training sequence) is assumed to be randomly distributed over a number of symbols. A straightforward extension of the CMIR to this case would be a joint timing offset and CIR estimation (assuming that the number of timing offsets is $K$):

```
for t = 1:K
        Initial CIR estimation h₀ by LS estimator (1);
        CMIR iterations by (4) – (9) to give an improved CIR h;
        Compute J(t, h) by (3);
end
```

Choose the $t_{opt}$ and $\mathbf{h}_{opt}$ as the final timing offset and CIR estimation such that $J(t_{opt}, \mathbf{h}_{opt}) = \min_{t, \mathbf{h}} J(t, \mathbf{h})$.

This first algorithm (LS-CMIR) can be for joint timing and CIR estimation.

The performance of this LS-CMIR algorithm was evaluated for a half rate speech channel in a typical urban fading condition and a gain of 1.5 dB over the conventional LS was observed in terms of frame erasure rate (FER). A concern is the complexity. Initial complexity estimation showed that about 2,000 DSP cycles would be needed for each of the CMIR iterations. This could be exorbitant for some applications, even with a modest number of timing offsets (e.g. $K$=7).

To reduce the computation load, the Algorithm can be modified by taking the CMIR iteration out of the timing search loop. The timing search is done jointly by the conventional Least Squares (LS) CIR estimation and the CMIR is applied to the final LS CIR estimation.

$$for\ t = 1:K$$
$$\qquad CIR\ estimation\ \mathbf{h}\ by\ LS\ estimator\ (1)\ -\ (2);$$
$$\qquad Compute\ Q(t,\ \mathbf{h})\ by\ (1);$$
$$end$$

Choose the $t_{ls}$ and $\mathbf{h}_{ls}$ as the final timing offset and CIR estimation such that

$$Q(t_{ls},\mathbf{h}_{ls}) = \min_{t,\mathbf{h}} Q(t,\mathbf{h})$$

Apply CMIR iterations on $\underline{\mathbf{h}_{ls}}$ by (4) – (9) to give an improved CIR $\mathbf{h}_{opt}$;

This second algorithm (LS-CMIR1) can be for joint timing and CIR estimation.

While the computation load for CMIR is reduced by $K$-fold, the performance is degraded noticeably. Simulation for the same channel and fading conditions showed that about half of the gain in the first algorithm. LS-CMIR was lost in second algorithm, LS-CMIR1.

It was observed that the peak of the cross correlations between the known training sequence (TS) and the received samples provides a better timing offset estimation than the LS counterpart. This lead to a modification of the algorithm as indicated:

*Compute the cross-correlations (xcs) between full TS and received samples covering the full timing offset range;*

*Filter the $|xcs|^2$ by a rectangular window with length XCINT;*

*Find the maximum of the filtered $|xcs|^2$. The corresponding timing offset $t_{xc}$ can be calculated and the associated CIR estimation $\mathbf{h}_{xc}$ can be extracted from the xcs at the timing offset.*

*Apply CMIR iterations on $\mathbf{h}_{xc}$ by (4) – (9) to give an improved CIR $\mathbf{h}_{opt}$;*

This third algorithm (XCF-CMIR1) can be used for joint timing and CIR estimation.

It was noted that XCINT=3 is an adequate choice for the timing offset estimation. A full training sequence, however, rather than a shortened training sequence, could be used. The simulation showed that the XCF-CMIR1 algorithm incurs very little loss comparing to the LS-CMIR algorithm in a low to medium carrier-to-interference (C/I) or signal-to-noise (S/N) region. The cross-correlation with a shortened TS (XCS-CMIR1) suffers loss similar to that of LS-CMIR1.

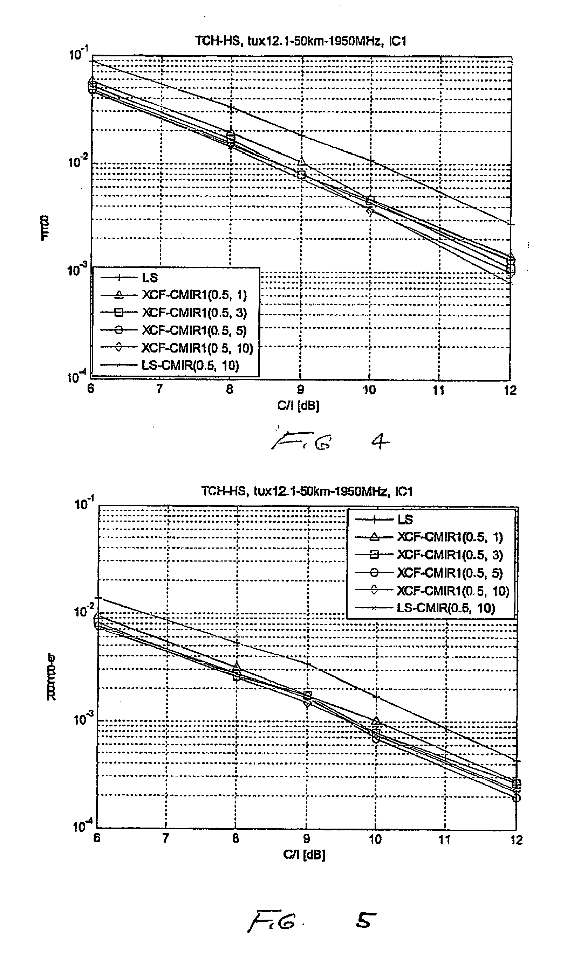

The number of iterations in the XCF-CMIR algorithm can be substantially reduced without significant loss if a proper step size is used. It is shown in the graphs of FIGS. 4 and 5 that acceptable performance can be achieved with an iteration number of 3 and a step size of 0.5. A GSM half rate speech traffic channel was used for the simulation. The propagation condition in the simulation is TU50 at 1950MHz. The frame erasure rate (FIG. 4) and residue bit error rate (FIG. 5) are shown against the cochannel interference level, as specified as reference interference performance by 3GPP.

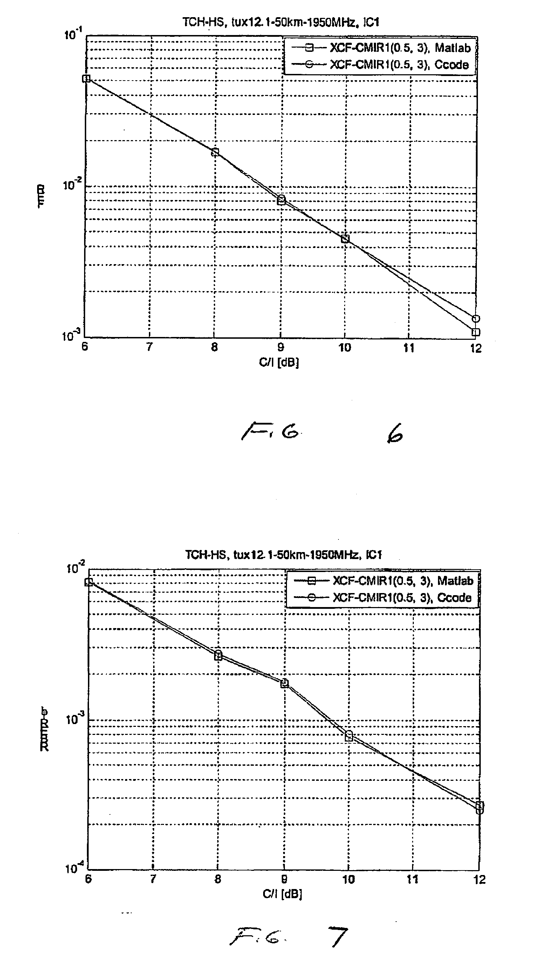

The XCF-CMIR has been implemented in a 16-bit DSP, for example, and costs 5808 DSP cycles for the CMIR with 3 iterations (~5 MIPS for 4 slots down or 1.5 MIPS for single slot GSM). The performance of the implementation was verified in FIGS. 6 and 7, which shows that the implementation loss is negligible.

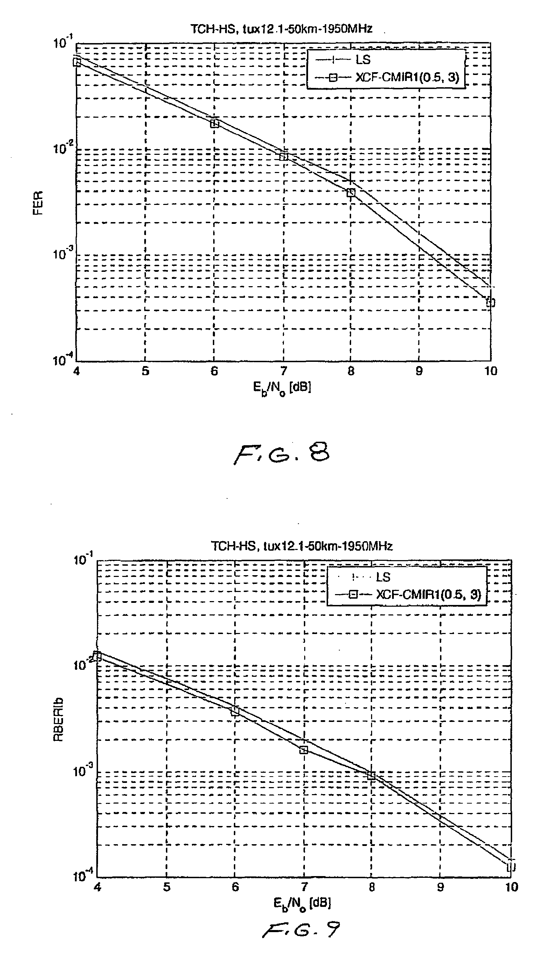

The XCF-CMIR also shows improvement in AWGN cases (as specified as reference sensitivity performance by 3GPP). This is shown by FIGS. 8 and 9. The speech channel and propagation condition are the same as those in FIGS. 4 and 5.

In the simulations, the number of trials conducted was 20,000. The method along with the step size and the iterations (enclosed in parentheses) used in the method are shown as the legend in the figures.

The iterative CMIR can be used to improve the accuracy of the CIR estimation. When timing offset is unknown and needs to be jointly estimated, the three algorithms can be applied as described, for example, the LS-CMIR, LS-CMIR1 and XCF-CMIR1 algorithm. The XCF-CMIR1 algorithm reduces the computations greatly while achieving a similar performance as a least squares CMIR. Simulations showed that the XCF-CMIR1 algorithm improves the error rate performance by ~0.5 to 1.5 dB in the interested SIR/SNR regions, comparing to the conventional LS CIR estimator.

Many modifications and other embodiments will come to the mind of one skilled in the art having the benefit of the teachings presented in the foregoing descriptions and the associated drawings. Therefore, it is understood that the specific embodiments disclosed are not limited, and that modifications and embodiments are intended to be included within the scope of the appended claims.

The following combinations are also disclosed.

There is provided a method of estimating a channel impulse response of a communications signal transmitted within a wireless communications system, which comprises:

receiving a communications signal as a burst of transmitted symbols including a known training sequence;
determining a timing offset and an initial channel impulse response based on the cross-correlations of the known training sequence and the received communications signal; and
applying a constant modulus interference removal iteration to improve the initial channel impulse estimation.

The method may further comprise estimating the timing offset by finding the maxima of filtered cross-sections wherein an optimized filter length is three for rectangular coefficients.

The method may further comprise estimating channel parameters as channel impulse response components that are processed for estimating the initial channel impulse response.

The method may further comprise applying a least squares (LS) estimation for estimating channel parameters.

The timing offset of the known training sequence of the transmitted symbols may be randomly distributed over a number of symbols.

The method may further comprise applying about three iterations for the constant modulus interference removal iteration.

The method may further comprise implementing the constant modulus interference removal iteration using a digital signal processor (DSP).

The method may further comprise forming the communications signal in accordance with the global system for mobile communications (GSM).

There is provided a method of estimating a channel impulse response of a communications signal transmitted within a wireless communications system, which comprises:

receiving within a channel estimator circuit and equalizer circuit a communications signal as a burst of transmitted symbols including a known training sequence;
determining a timing offset and an initial channel impulse response based on the cross-correlations of the known training sequence and the received communications signal; and
applying a constant modulus interference removal iteration to improve the initial channel impulse estimation.

The method may further comprise estimating the timing offset by finding the maxima of filtered cross-sections wherein an optimized filter length is three for rectangular coefficients.

The method may further comprise forming the equalizer circuit as a conventional and/or single antenna interference cancellation equalizer circuit.

The method may further comprise estimating channel parameters as channel impulse response components that are processed for estimating the initial channel impulse response.

The method may further comprise applying a least squares (LS) estimation within the channel estimator circuit for estimating channel parameters.

The timing offset of the known training sequence of the transmitted symbols may be randomly distributed over a number of symbols.

The method may further comprise applying about three iterations for the constant modulus interference removal iteration.

The method may further comprise implementing the constant modulus interference removal iteration using a digital signal processor (DSP).

The method may further comprise forming the communications signal in accordance with the global systems for mobile communications (GSM).

There is provided a receiver for estimating a channel impulse response within a wireless communications system, comprising:

a channel estimator circuit that receives a communications signal as a burst of transmitted symbols including a known training sequence of the transmitted symbols and estimates channel parameters as channel impulse response components; and

an equalizer circuit that receives the channel impulse response components and determines an initial channel impulse response based on the cross-correlations of the known training sequence and the received communications signal and applies a constant modulus interference removal iteration to improve the initial channel impulse estimation.

The circuit may be operative for estimating the timing offset by finding the maxima of filtered cross-sections wherein an optimized filter length is three for rectangular coefficients.

The equalizer circuit may comprise a conventional and/or a single antenna interference cancellation equalizer circuit.

The receiver may further comprise a digital signal processor operative for implementing the constant modulus interference removal iteration.

The channel estimator circuit may apply a least squares (LS) estimation for estimating channel parameters.

The communications signal may comprise a signal formed in accordance with the global system for mobile communications (GSM).

## Claims

1. A method of processing a received communications signal, comprising:

    estimating (50) an initial Channel Impulse Response (CIR) of the received communications signal; and
    applying (52) a constant modulus interference removal iteration to improve the initial channel impulse estimation.

2. The method according to Claim 1, wherein estimating the initial Channel Impulse Response comprises cross-correlating a known training sequence and the received communications signal.

3. The method according to Claim 1 or 2, which further comprises receiving the communications signal as a burst of transmitted symbols including a known training sequence.

4. The method according to Claim 1, 2 or 3, wherein the step of estimating an initial Channel Impulse Response further comprises determining a timing offset and cross-correlations of the known training sequence and the received communications signal.

5. The method according to Claim 4, which further comprises determining the timing offset by finding the peak cross-correlation between the received signal and the known training sequence.

6. The method according to Claim 5, wherein the constant modulus interference removal iteration is performed at least three times.

7. The method according to any preceding claim, which further comprises estimating channel parameters as channel impulse response components for estimating the initial channel impulse response.

8. The method according to Claim 7, which further comprises applying a least squares (LS) estimation for estimating channel parameters.

9. The method according to any preceding claim, which further comprises receiving the communications signal within a channel estimator circuit and equalizer circuit.

10. The method according to Claim 9, which further comprises forming the equalizer circuit as a conventional and/or single antenna interference cancellation equalizer circuit.

11. A receiver (60) comprising:

    a channel estimator circuit (66) that receives a communications signal and estimates channel impulse response components; and
    an equalizer circuit (68) that receives the channel impulse response components and estimates an initial Channel Impulse Response (CIR) of the received communications signal and applies a constant modulus interference removal iteration to improve the initial channel impulse estimation.

**12.** The receiver according to Claim 11, wherein said equalizer circuit (68) estimates an initial Channel Impulse Response by cross-correlating a known training sequence and the received communications signal.

**13.** The receiver according to Claim 11 or 12, wherein said equalizer circuit (68) determines a timing offset and cross-correlations of the known training sequence and the received communications signal.

**14.** The receiver according to Claim 13, wherein said equalizer circuit (68) determines the timing offset by finding the peak cross-correlation between the received signal and the known training sequence.

**15.** The receiver according to any of claims 11 to 14, wherein said equalizer circuit (68) comprises a conventional and/or single antenna interference cancellation equalizer circuit.

**16.** The receiver according to any of claims 11 to 15, wherein said channel estimator circuit receives a communications signal as a burst of transmitted signals including a known training sequence of the transmitted signals.


**Patentansprüche**

**1.** Verfahren zur Verarbeitung eines empfangenen Kommunikationssignals, das aufweist:

Schätzen (50) einer Kanal-Impulsantwort (CIR - Channel Impulse Response) des empfangenen Kommunikationssignals; und
Anwenden (52) einer konstanten Modulus-Interferenz-Entfernungs-Iteration, um die anfängliche Kanal-Impulsschätzung zu verbessern.

**2.** Verfahren gemäß Anspruch 1, wobei ein Schätzen der anfänglichen Kanal-Impulsantwort ein Kreuzkorrelieren einer bekannten Trainingssequenz und des empfangenen Kommunikationssignals aufweist.

**3.** Verfahren gemäß Anspruch 1 oder 2, das weiter aufweist ein Empfangen des Kommunikationssignals als ein Burst von übertragenen Symbolen, einschließlich einer bekannten Trainingssequenz.

**4.** Verfahren gemäß Anspruch 1, 2 oder 3, wobei der Schritt des Schätzens einer anfänglichen Kanal-Impulsantwort weiter aufweist ein Bestimmen eines Timing-Offsets und Kreuzkorrelationen der bekannten Trainingssequenz und des empfangenen Kommunikationssignals.

**5.** Verfahren gemäß Anspruch 4, das weiter aufweist ein Bestimmen des Timing-Offsets durch Finden der maximalen Kreuzkorrelation zwischen dem empfangenen Signal und der bekanten Trainingssequenz.

**6.** Verfahren gemäß Anspruch 5, wobei die konstante Modulus-Interferenz-Entfernungs-Iteration zumindest drei Mal durchgeführt wird.

**7.** Verfahren gemäß einem vorhergehenden Anspruch, das weiter aufweist ein Schätzen von Kanal-Parametern als Kanal-Impulsantwort-Komponenten zum Schätzen der anfänglichen Kanal-Impulsantwort.

**8.** Verfahren gemäß Anspruch 7, das weiter aufweist ein Anwenden einer Fehlerquadrat(LS - least squares)-Schätzung zum Schätzen von Kanal-Parametern.

**9.** Verfahren gemäß einem vorhergehenden Anspruch, das weiter aufweist Empfangen des Kommunikationssignals in einer Kanal-Schätzer-Schaltung und Entzerrerschaltung.

**10.** Verfahren gemäß Anspruch 9, das weiter aufweist Ausbilden der Entzerrerschaltung als eine herkömmliche und/oder Einzel-Antennen-Interferenz-Löschungs-Entzerrerschaltung.

**11.** Empfänger (60), der aufweist:

eine Kanal-Schätzer-Schaltung (66), die ein Kommunikationssignal empfängt und Kanal-Impulsantwort-Komponenten schätzt; und eine Entzerrerschaltung (68), welche die Kanal-Impulsantwort-Komponenten empfängt und eine anfängliche Kanal-Impulsantwort (CIR) des empfangenen Kommunikationssignals schätzt und eine konstante Modulus-Interferenz-Entfernungs-Iteration anwendet, um die anfängliche Kanal-Impulsschätzung zu verbessern.

**12.** Empfänger gemäß Anspruch 11, wobei die Entzerrerschaltung (68) eine anfängliche Kanal-Impulsantwort schätzt durch Kreuzkorrelieren einer bekannten Trainingssequenz und des empfangenen Kommunikationssignals.

**13.** Empfänger gemäß Anspruch 11 oder 12, wobei die Entzerrerschaltung (68) ein Timing-Offset und Kreuzkorrelationen der bekannten Trainingssequenz und des empfangenen Kommunikationssignals bestimmt.

**14.** Empfänger gemäß Anspruch 13, wobei die Entzerrerschaltung (68) den Timing-Offset bestimmt durch Finden der maximalen Koreuzkorrelation zwischen dem empfangenen Signal und der bekannten Trainingssequenz.

**15.** Empfänger gemäß einem der Ansprüche 11 bis 14, wobei die Entzerrerschaltung (68) eine herkömmliche und/oder Einzel-Antennen-Interferenz-Löschungs-Entzerrerschaltung aufweist.

**16.** Empfänger gemäß einem der Ansprüche 11 bis 15, wobei die Kanal-Schätzer-Schaltung ein Kommunikationssignal als einen Burst von übertragenen Signalen empfängt, einschließlich einer bekannten Trainingssequenz der übertragenen Signale.

**Revendications**

**1.** Procédé de traitement d'un signal de communication reçu, comprenant :

l'estimation (50) d'une Réponse Impulsionnelle de Canal (CIR - Channel Impulse Response) initiale du signal de communication reçu ; et
l'application (52) d'une itération d'élimination du brouillage à module constant pour améliorer la réponse impulsionnelle de canal initiale.

**2.** Procédé selon la revendication 1, dans lequel l'estimation de la Réponse Impulsionnelle de Canal initiale comprend l'intercorrélation d'une séquence d'apprentissage connue et du signal de communication reçu.

**3.** Procédé selon la revendication 1 ou 2, comprenant en outre la réception du signal de communication sous la forme d'une salve de symboles transmis comportant une séquence d'apprentissage connue.

**4.** Procédé selon la revendication 1, 2 ou 3, dans lequel l'étape d'estimation d'une Réponse Impulsionnelle de Canal initiale comprend en outre la détermination d'un décalage temporel et d'intercorrélations de la séquence d'apprentissage connue et du signal de communication reçu.

**5.** Procédé selon la revendication 4, comprenant en outre la détermination du décalage temporel par recherche du pic d'intercorrélation entre le signal reçu et la séquence d'apprentissage connue.

**6.** Procédé selon la revendication 5, dans lequel l'itération d'élimination du brouillage à module constant est effectuée au moins trois fois.

**7.** Procédé selon l'une quelconque des revendications précédentes, comprenant en outre l'estimation de paramètres du canal en tant que composantes de la réponse impulsionnelle de canal destinées à estimer la réponse impulsionnelle de canal initiale.

**8.** Procédé selon la revendication 7, comprenant en outre l'application d'une estimation par les moindres carrés (LS - Least Squares) pour estimer des paramètres du canal.

**9.** Procédé selon l'une quelconque des revendications précédentes, comprenant en outre la réception du signal de communication dans un circuit estimateur de canal et dans un circuit égaliseur.

**10.** Procédé selon la revendication 9, comprenant en outre la formation du circuit égaliseur sous la forme d'un circuit égaliseur classique et/ou d'annulation du brouillage à une seule antenne.

**11.** Récepteur (60) comprenant :

un circuit estimateur de canal (66) qui reçoit un signal de communication et estime des composantes de la réponse impulsionnelle de canal ; et
un circuit égaliseur (68) qui reçoit les composantes de la réponse impulsionnelle de canal et estime la Réponse Impulsionnelle de Canal (CIR) initiale du signal de communication reçu et applique une itération d'élimination du brouillage à module constant pour améliorer l'estimation de la réponse impulsionnelle de canal initiale.

**12.** Récepteur selon la revendication 11, dans lequel ledit circuit égaliseur (68) estime une Réponse Impulsionnelle de Canal initiale par intercorrélation d'une séquence d'apprentissage connue et du signal de communication reçu.

**13.** Récepteur selon la revendication 11 ou 12, dans lequel ledit circuit égaliseur (68) détermine un décalage temporel et des intercorrélations de la séquence d'apprentissage connue et du signal de communication reçu.

**14.** Récepteur selon la revendication 13, dans lequel ledit circuit égaliseur (68) détermine le décalage temporel en recherchant le pic d'intercorrélation entre le signal reçu et la séquence d'apprentissage connue.

**15.** Récepteur selon l'une quelconque des revendications 11 à 14, dans lequel ledit circuit égaliseur (68) comprend un circuit égaliseur classique et/ou d'annulation du brouillage à une seule antenne.

**16.** Récepteur selon l'une quelconque des revendications 11 à 15, dans lequel ledit circuit estimateur de canal reçoit un signal de communication sous la forme d'une salve de signaux transmis comportant une séquence d'apprentissage connue des signaux transmis.

10

| 11 | 12 | 14 | 15 | 16 |
|---|---|---|---|---|

received signal → | Receiver filter | → y → | Channel estimator | → y,h → | SAIC equalizer | → | De-interleaver | → | Channel decoder | → output symbols

FIG. 1A

PRIOR ART

| 21 | 22 | 23 | 24 |
|---|---|---|---|
| Receiver receives incoming radio transmission burst and provides received symbols y including a known training sequence m. | Channel estimator computes channel impulse response h by determining values for components of h that minimize cost function $j_{ch}(h)$. | SAIC equalizer determines tap values of equalizer. | SAIC equalizer provides equalizer output to deinterleaver. |

PRIOR ART

FIG. 1B

Cross- Correlate Timing
For Initial
CIR Estimate
(Coarse Estimate)

─── 50

Apply Iterative CMIR
For Improved
CIR Estimate

~ 52

FIG. 2

60

62

66

64

68

| Receiver<br>Front<br>End<br>Filter<br>Antenna<br>other<br>Components | Channel<br>Estimator<br>Circuit | Equalizer<br>Circuit | Back End<br>Components<br>De Interleaver<br>Decoder<br>Detector<br>Functions |

DSP Functions

FIG. 3

TCH-HS, tux12.1-50km-1950MHz, IC1

FIG 4

TCH-HS, tux12.1-50km-1950MHz, IC1

FIG 5

TCH-HS, tux12.1-50km-1950MHz, IC1

*Fig. 6*

TCH-HS, tux12.1-50km-1950MHz, IC1

*Fig. 7*

TCH-HS, tux12.1-50km-1950MHz

F.G. 8

TCH-HS, tux12.1-50km-1950MHz

F.G. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7006811 B

- US 20040170234 A

**Non-patent literature cited in the description**

- Co-Channel Interference Suppression For Constant Modulus Signals. **Pukkila et al.** IEEE Communications Society. 20 June 2004, 2548-2552